Europäisches Patentamt

European Patent Office

Office européen des brevets

(19)

(11) Publication number: **0 001 316**
**B1**

# EUROPEAN PATENT SPECIFICATION

(12)

(45) Date of publication of patent specification: **27.01.82**

(51) Int. Cl.³: **B 65 G 1/06, B 65 D 83/00**

(21) Application number: **78200210.9**

(22) Date of filing: **26.09.78**

(54) Holder for packaging, transporting, displaying and offering for sale articles.

(30) Priority: **27.09.77 NL 7710543**

(43) Date of publication of application:
**04.04.79 Bulletin 79/7**

(45) Publication of the grant of the European patent:
**27.01.82 Bulletin 82/4**

(84) Designated Contracting States:
**BE CH DE FR GB LU NL SE**

(56) References cited:
**DE - A - 2 211 799**
**FR - E - 79 868**
**GB - A - 725 567**
**US - A - 2 665 806**

(73) Proprietor: **Brinkers, Gerardus Cornelis**
**Vlamingstraat 49**
**NL-2711 AD Zoetermeer (NL)**

(72) Inventor: **Brinkers, Gerardus Cornelis**
**Vlamingstraat 49**
**NL-2711 AD Zoetermeer (NL)**

(74) Representative: **Mathol, Heimen et al,**
**Willem Witsenplein 3 & 4**
**NL-2509 LP Den Haag (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Holder for packaging, transporting, displaying and offering for sale articles.

The invention relates to a holder for packaging, transporting, displaying and offering for sale articles, a pallet unit being present within said holder which carries in filled condition of the holder a number of layers of articles separated by intermediate trays with means being provided under the bottom of the holder for the support and easy conveyance of the filled holder. Such a holder is known in different embodiments but generally serves as a temporary transportation unit for conveying a large number of articles e.g. stacked on a pallet from the manufacturer to the whole sale trade or to a supermarket. Here the merchandise is unloaded and either packed again in smaller boxes or put on the shelves.

A disadvantage of such a holder or transportation unit consists in that on its place of destination, after opening the holder, the articles have to be unloaded for further handling viz. either rewrapping them or exposing them for sale.

The invention aims at providing a holder which can be loaded at the manufacturing plant with the articles which will there after never be touched again by a person, except by the buyer (housewife). The invention therefor aims to provide a holder which may be used at the same time for packaging, storing, transporting and displaying the articles in such a manner, that the buyers have an easy access to the articles.

The holder according to the invention is characterized in that the pallet unit is provided with downwardly or both upwardly and downwardly directed rim flanges and the trays are provided with an upwardly and/or downwardly directed rim flanges, the flanges serving to guide the pallet and trays within the holder and in that under the pallet unit a levelling device is present for the controlled lifting and lowering of the pallet unit with the articles thereon together with the superimposed trays with articles, said levelling device — in the lowest position of the pallet unit — being accommodated within the space surrounded by the downwardly extended rim flange of said pallet unit, the levelling device cooperating with or being adapted to be acted upon the selectively operable actuating means for the selective vertical displacement of the pallet unit.

The rim flanges on the pallet unit and trays serve for keeping them in a horizontal position during their moving up and down in the holder. The pallet unit may thereby be provided on three sides with an upwardly and downwardly extending rim flange and on the fourth side with merely a flange on the under side. Since no upper flange is present on one side, a mechanical loading may be done from that side. A first layer of articles is pushed on the horizontal pallet unit after being raised to its highest position at the upper side of the holder.

Hereafter the levelling device lowers the pallet unit in order to permit a second layer of articles to be loaded together with an intermediate tray either carrying the second layer or having previously been laid upon the first layer. The holder may then be further loaded by subsequently bringing in successive layers with articles. Finally the upper side of the holder is closed and the holder in filled condition is ready for transportation. For that purpose special means are provided under the bottom of the holder. The volume of the holder is nearly completely filled with the articles since the levelling device is situated in the narrow space between the bottom of the holder and the pallet unit in its lowest position. The width of this space is mainly determined by the height of the lower portion of the rim flange of the pallet unit.

At its place of final destination the top side of the holder is opened and the articles are offered for sale at a convenient level. In this manner the consumers (housewives) can inspect and remove the articles easily. As soon as the upper layer is sold out, the pallet unit is raised in order to bring the next layer at the correct level. This renders is possible to have the articles always within reach of hand and vision of the potential buyers, who do not need to bend down to inspect the products. This is an attractive aspect of the invention.

After emptying the holder, it may be used again. The holder according to the invention may be made out of cardboard and in that case is generally destined for use only once. It represents a major improvement over the prior art in that much labour is saved at the retail shop as the consumer will be the first person ever touching the articles. This will also contribute in keeping the articles free from fingerprints or stains caused by repeatedly touching the articles.

An important advantage of the invention consists in the environment-friendly aspect of the holder. Said holder makes it indeed possible for the whole sale trade to omit the up to now necessary changing of boxes (retailer package).

It is observed that DE A 2 211 799 discloses a self-levelling dispenser comprising a holder with a pallet unit for offering articles, said holder having means for the support and easy conveyance of the filled holder. This known device operates with spring force and comprises means to adapt the levelling device to the specific weight of the articles. There are no actuating means for the controlled lifting and lowering of the pallet unit i.e. for the selective vertical displacement of said unit. The levelling device is mounted in a separate lateral portion of the holder and is not accommodated in the lost space under the pallet unit determined by the rim flange.

It is further observed that GB A 725 567 discloses a self-levelling, storing and dispensing apparatus comprising a pallet unit and trays carrying layers of articles, with the purpose for offering the upper layer of these articles. This pallet unit is suspended in a frame having a foot portion standing on the ground. There are once again no actuating means for the selective lifting and lowering of the pallet unit i.e. for the positive vertical displacement of said unit in order to bring the upper layer at the open top side of a (non-present) holder.

Finally it is observed that FR E 79 868 discloses a holder for transporting workpieces between workstations having a mobile bottom (pallet unit) for storing and dispensing articles in five embodiments. The first four comprise a self levelling device with the first one comprising rimflanges around the mobile bottom for maintaining the position of the bottom horizontal. There is a possibility for controlled lifting and lowering of the mobile bottom, but the holder is not appropriate for transport in filled condition in view of its open top. The fifth embodiment comprises actuating means for the positive vertical displacement of the bottom. The holder in this latter embodiment however only comprises two opposite vertical walls since both other open sides are necessary for accommodating the levelling device.

The invention will be more clearly described by means of the accompanying drawings, showing an embodiment of the holder according to the invention.

In the drawings:

Figure 1 shows a view of the holder according to the invention with opened upper side,

Figure 2 is a cross section of a portion of the holder with tubular connections for the supply of conditioned air,

Figure 3 gives a partial view of the upper side of the holder in the position of the articles offered for sale with the pallet unit half way up the holder,

Figure 4 shows a holder with an endless belt next to the holder for loading articles on the pallet unit,

Figure 5 is a longitudinal section of the lower end of the holder with the inflatable hollow body being at its lowest position,

Figure 6 is a longitudinal section of a holder comprising a hollow wall in which a screw spindle is mounted acting as a levelling mechanism.

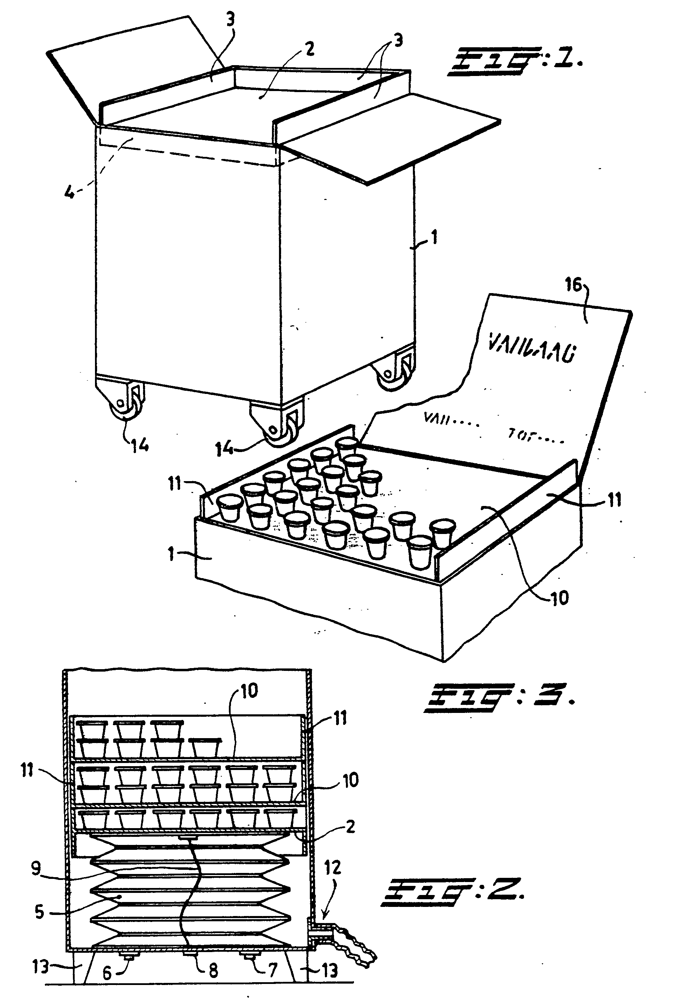

In the drawings a holder is indicated with numeral 1, which may be manufactured from cardboard in the form of corrugated cardboard, however, also of any other material and of which the upper side is opened. A pallet 2 which has been brought to the upper rim of the holder in the manner to be described hereinafter is provided with flanges 3 on three sides. A fourth flange is indicated in Figure 2 with the reference numeral 4. In the position indicated in Figure 1 a tray with articles may be pushed from the front side of the holder or on the pallet 2 by means of a conveying belt or lifting device.

Under the pallet 2 a levelling device 5 is present by means of which the pallet 2 is brought into the position indicated. In the presented embodiment of the holder according to the invention said device for moving up and down the pallet 2 comprises an accordion bellows (see Figure 2) provided with a valve 6 which may be connected to a hand pump, to a source for compressed air or a foot pump for inflating the bellows 5 and thereby thus a rising of the pallet 2. The valve 6 may also serve as a pressure relief valve in case air has to be removed from the bellows for lowering the pallet 2. A pressure safety valve 7 is also connected to the bellows 5 which valve may be so adjusted that the pressure in the bellows 5 may not exceed a previously determined maximum. The elements 6, 7 are associated with the pneumatic means for actuating the levelling device i.e. the bellows 5.

Furthermore there is present a valve 8 which is connected to a wire 9 with the under side of the pallet 2. As soon as the pallet 2 has arrived in the desired manner on the upper side of the holder as shown in Figure 1 the wire 9 is stretched and on further extension of the bellows 5 the valve 8 would be opened for relieving the pressure in the bellows 5.

After placing a tray with articles on the pallet 2 the pressure in the bellows is lowered which may be done by means of the valve 6 so that the pallet 2 goes downwards and a successive tray of articles may be placed on the firstly provided tray. Only a few of the trays with articles indicated in Figure 2 with the reference numeral 10 are shown in said figure.

The trays 10 are at the upper side provided with rim flanges 11 for preventing the trays placed above each other from leaning on the articles of a tray below said tray and guiding the trays within the holder. This is of course of importance in case the articles are fragile or packed in easily deformable or fragile packages such as paper beakers or thin synthetic packages.

In Figure 2 a connection 12 is indicated for a tube for connecting to a source of compressed air, which air is used for flowing around the articles, for example for cooling.

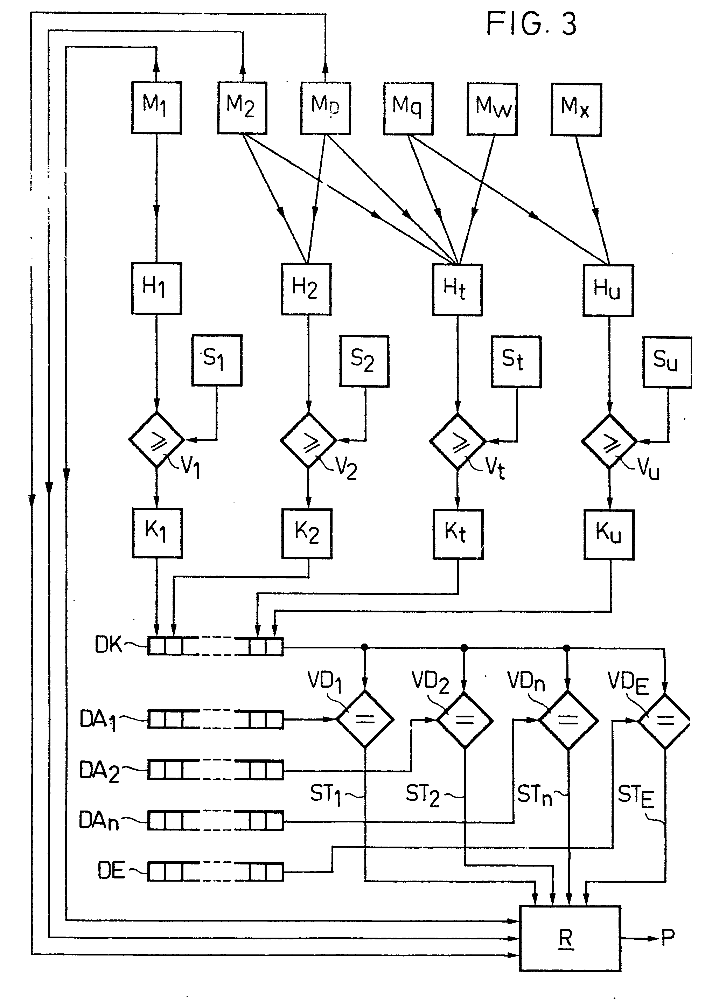

Figure 3 shows the position wherein the holder according to the invention is in a position exhibiting the articles offered for sale on a tray 10. The holder 1 is in said embodiment provided with a cover 16 with a multiple purpose. On the inner side of said cover a special sales offer may be announced thereon, said cover forming together with the flanges 11 a surrounding for the products. After the sale of said articles the tray is removed and the bellows 5 so inflated that a successive tray 10 comes at the place of the removed tray. After the lowest tray 10 has finally served for exhibiting of the articles and said tray has become empty all trays may be placed inside the holder after the air from the bellows 5 is released. The holder may then be used again for packaging etc.

For increasing the suitability and easy handling of the holder 1 same is provided under the bottom with small legs 13 (see Figure 2) or preferably as shown in Figure 5 with castor wheels 14.

Figure 4 gives a view of the holder being loaded. Next to the holder 1 a conveying belt 15 is present for supplying the articles to be packaged on the pallet unit 2 at the side where there is only a downward flange 4. After the articles are placed on the pallet unit 2 the pallet unit is allowed to descend and a tray with articles placed thereon may be stacked on the pallet unit etc.

Figure 5 shows a longitudinal section of the lower side of the holder provided with legs or castor rolls, the inflatable hollow body 5 being at its lowest position.

Figure 6 is an embodiment using a screw spindle 20 with a double nut 21 for carrying an arm 22 supporting the pallet unit 2. The spindle 20 is connected to a handle 23 through a conical gearing 24.

## Claim

A holder (1) for packaging, transporting, exhibiting and offering-for sale articles, a pallet unit (2) being present within said holder which carries in the filled condition of the holder a number of layers of articles separated by intermediate trays (10), with means (13, 14) being provided under the bottom of the holder (1) for the support and easy conveyance of the filled holder, characterised in that the pallet unit (2) is provided with downwardly or both upwardly and downwardly directed rim flanges (3, 4) and the trays (10) are provided with an upwardly and/or downwardly directed rim flanges (11), the flanges (3, 4, 11) serving to guide the pallet and trays within the holder and that under the pallet unit a levelling device (5, 19, 20—22) is present for the controlled lifting and lowering of the pallet unit with the articles thereon together with the superimposed trays with articles, said levelling device — in the lowest position of the pallet unit — being accommodated within the space surrounded by the downwardly extended rim flange (4) of said pallet unit, the levelling device cooperating with or being adapted to be acted upon by selectively operable actuating means (6 + 7, 23, 24) for the selective vertical displacement of the pallet unit.

## Patentanspruch

Behälter (1) zum Verpacken, Transportieren, Ausstellen und Anbieten von Verkaufsgegenständen mit einer in dem Behälter angeordneten Paletteneinheit (2), die im Füllzustand des Behälters eine Anzahl von Lagen der Gegenstände aufweist, getrennt durch Zwischenbretter (10), versehen mit Mitteln (13, 14), die unter dem Boden des Behälters (1) als Stütze und zur leichten Führung des gefüllten Behälters angebracht sind, dadurch gekennzeichnet, daß die Paletteneinheit (2) mit einem nach unten gerichteten oder sowohl nach oben als auch nach unten gerichteten Randflanschen (3, 4) versehen ist, daß die Bretter (10) nach unten und/oder nach oben gerichtete Randflansche (11) aufweisen, wobei die Flansche (3, 4, 11) zum Führen der Palette und der Bretter in dem Behälter dienen, daß unter der Paletteneinheit eine Ausrichtvorrichtung (5, 19, 20—22) angeordnet ist, die ein kontrolliertes Heben und Senken der Paletteneinheit mit den darauf befindlichen Gegenständen zusammen mit den aufgelegten Brettern einschließlich der Gegenstände bewirkt, daß die Ausrichtvorrichtung — in der untersten Stellung der Paletteneinheit — an den rundumlaufenden Abstand des nach unten gerichteten Randflansches (4) der Paletteneinheit angepaßt ist und daß die Ausrichtvorrichtung zusammenwirkt mit oder eingerichtet ist, um sich auf auswählbar arbeitende Antriebsmittel (6 + 7, 23, 24) für ein bestimmtes vertikales Verschieben der Paletteneinheit einzustellen.

## Revendication

Conteneur (1) pour l'emballage, le transport, la présentation et l'offre à la vente d'articles comprenant intérieurement une palette (2) qui, lorsque le conteneur est rempli, porte un certain nombre de couches d'articles séparées par des plateaux intermédiaires (10), des moyens (13, 14) étant prévus sous le fond du conteneur (1) pour le supporter et permettre de le déplacer facilement lorsqu'il est plein, conteneur caractérisé en ce que la palette (2) est pourvue de rebords (3, 4) dirigés vers le bas ou à la fois vers le haut et vers le bas, et que les plateaux (10) sont pourvus de rebords (11) dirigés vers le haut et/ou vers le bas, les rebords (3, 14, 11) servant à guider la palette et les plateaux à l'intérieur du conteneur, et en ce que sous la palette se trouve un dispositif de mise au niveau (5, 19, 20—22) pour faire monter et descendre, à la commande, la palette avec les articles qu'elle supporte avec les plateaux superposés pourvus d'articles, ce dispositif d'établissement de niveau étant — dans la position la plus basse de la palette — logé à l'intérieur de l'espace entourant le rebord (4) s'étendant vers le bas, le dispositif de mise à niveau coopérant avec, ou étant agencé de façon à être actionné par, des moyens de commande pouvant agir (6 + 7, 23, 24) pour le déplacement vertical sélectif de la palette.

FIG:1.

FIG:3.

FIG:2.

FIG. 3

0 003 958

19